# EUROPEAN PATENT SPECIFICATION

(11) **EP 0 313 272 B1**
(45) Date of publication and mention of the grant of the patent: **28.04.1993**
(21) Application number: 88309595.2
(22) Date of filing: 13.10.1988
(51) Int. Cl.: C02F 1/50

(54) **A method of inhibiting the growth of microorganisms in aqueous liquids**
Verfahren zur Verhinderung des Wachstums von Kleinlebewesen in wässrigen Flüssigkeiten
Procédé pour empêcher la croissance des micro-organismes dans les liquides aqueux

(30) Priority: 13.10.1987 US 106589
(43) Date of publication of application: 26.04.1989
(73) Proprietor: BUCKMAN LABORATORIES INTERNATIONAL, INC., Memphis Tennessee 38108-0305 (US)
(72) Inventor: Rayudu, Sreedhar Rao, Germantown Tennessee 38138 (US); Pera, John Dominic, Cordova Tennessee 38018 (US)
(74) Representative: Matthews, Derek Peter

(56) References cited:
- DE-A- 1 936 713
- US-A- 3 024 159
- US-A- 3 874 925

## Description

This invention relates generally to a method for inhibiting the growth of a microorganism in an aqueous liquid. The compounds useful in the method of this invention are particularly useful for slime control in pulp and paper mills, as microbicides and algicides for the treatment of fresh water used in industrial processes, and also as microbicides and algicides in swimming pools and cooling towers. The compounds disclosed herein can also be used in a method for inhibiting the growth of sulfate-reducing and iron bacteria.

It has been proposed that certain halogenated ketones, for example, bromoacetone, be used to control the growth of microorganisms encountered in industrial process systems. While these compounds are sufficiently effective in the control of microorganisms, they disadvantageously are lachrymators and thus persons handling these products, or solutions containing the same, need to wear gas masks.

Iodoacetone has been previously urged in U.S. Patent No. 3,874,925 to be effective against thermophilic bacteria in the extraction of sugar from beets. This is a specialized application against a restricted group of bacteria. As used herein, neither of the terms "microorganism" or "bacteria" includes thermophilic bacteria.

When an iodoacetone compound, rather than a bromoacetone compound is employed, the vapor pressure of the iodoacetone is sufficiently reduced such that the iodoacetone is nonlachrymatory. It is surprising, however, that the efficacy and stability of the iodoacetone compounds are maintained at a high level since it is well-known that under hydrolyzing conditions, chlorine compounds are more stable than bromine compounds, which in turn are more stable than iodine compounds. Nevertheless, the iodoacetone compounds employed in the method of this invention are sufficiently stable to be useful even in slightly alkaline aqueous systems.

The present invention can overcome the problems and disadvantages of the prior art by providing a method for inhibiting the growth of microorganisms other than thermophilic bacteria in an aqueous liquid comprising the step of adding to the aqueous liquid an iodoacetone compound of the formula (I) 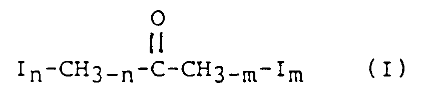
wherein n is 1, 2 or 3 and m is 0, 1, 2 or 3 in an amount of from 0.1 to 500 parts per million parts of aqueous liquid.

An object of the invention is to provide a method for inhibiting the growth of slime-forming microorganisms in pulp and papermill waters which is effective against a wide range of concentrations of cellulosic material encountered in pulp and papermill waters.

Another object is to provide a method for controlling biofilm formation and algae proliferation (1) in industrial water systems such as cooling towers and other evaporative cooling systems, (2) on surfaces when water is used for injection during the secondary recovery of crude oil, and, (3) in yet other systems where biofilm formation detracts from efficient operation.

Thus in a preferred aspect of the above defined method the microorganisms are those causing slime or biofilm.

It is a further object to provide a method utilizing a single active toxicant or control agent, i.e., the iodoacetone, which compound can normally be practically completely removed by a water wash from the finished product.

Reference will now be made in detail to the preferred embodiments of the invention.

The iodoacetone is used in an amount effective to accomplish the intended purpose, e.g., inhibiting a particular microorganism. One skilled in the art can routinely ascertain an effective amount for a particular application within the range of from 0.1 to 500 ppm, more preferably, from 0.2 to 250 ppm.

Exemplary suitable iodoacetone compounds include iodoacetone, 1,3-diiodoacetone and 1,1-diiodoacetone.

The iodoacetone compounds employed in the method of the invention can be prepared by well-known methods, such as by a metathesis reaction wherein either a bromine atom or a chlorine atom, preferably chlorine, is replaced by iodine by using a metal iodide, preferably potassium iodide. Exemplary solvents that may be used in the reaction include methylene chloride, dimethylformamide and acetone. The temperature of the reaction can vary from about 0 to about 40°C. The compounds are formed in good yields when prepared by a metathesis reaction.

Iodoacetone can be prepared from chloroacetone by using either sodium iodide or potassium iodide as the source of iodine.

1,3-Diiodoacetone can be prepared from 1,3-dichloroacetone using two molar equivalents of sodium or potassium iodide.

1,1-Diiodoacetone can be prepared from 1,1-dichloroacetone using two molar equivalents of sodium or potassium iodide.

Additional iodoacetone compounds can be prepared from appropriately substituted haloacetones.

The iodoacetones employed in the method of this invention are only slightly soluble in water. Exemplary suitable solvents that can be employed in the method of the invention include alcohols, ketones, esters, glycol-ethers, ethers, formamide, dimethylformamide, chlorinated hydrocarbons and hydrocarbons such as toluene and hexane. Generally, the more polar solvents are preferred. The disperibility of the iodoacetone compounds in the above solvents and also in aqueous liquids can be enhanced by the addition of various emulsifiers, penetrants, and other surface active agents. A nonionic emulsifier is generally preferred.

As explained above, the iodoacetones are effective against sulfate-reducing organisms and iron bacteria. Sulfate-reducing organisms are of the genera Desulfotomaculum, Desulfovibrio, Desulforistella, Desulfomonas, Desulfobacter and Desulfobulbus. Examples of iron bacteria are Sphaerotilus sp., Gallionella sp., and Siderocapsa sp.

The microorganism may also be a bacterium, for example Enterobacter aerogenes or Pseudomonas aeruginosa, a fungus, for example Aspergillus niger or an alga such as Chlorella pyrenoidosa or Phormidium inundatum.

The invention will be further clarified by the following examples, which are intended to be merely illustrative of the present invention.

### Example 1: Preparation of Iodoacetone Compound

A 250 ml, three-necked round-bottom flask equipped with stirrer, condenser and a thermometer was charged with 20 g of 90% chloroacetone (0.2 mole) (commercially available, practical grade) and 100 ml of acetone. 30.0 g (0.2 mole) of sodium iodide were added at a rate such that the temperature was maintained at between 20° and 30°C. The reaction of sodium iodide with chloroacetone was exothermic. The reaction flask was cooled with ice-water to control the temperature and then, after the addition of sodium iodide was completed, the contents of the flask were stirred for two hours. The reaction mixture was then filtered to collect the sodium chloride and the filtrate was then evaporated in vacuo. The residue was diluted with 200 ml of methylene chloride and filtered again to collect additional salt. The filtrate was washed with two 100 ml portions of water, dried over anhydrous magnesium sulfate and evaporated in vacuo. 35.2 g of a dark brown oil were obtained (yield = 95.7%). This product was vacuum distilled at 52°C at 8 mm of mercury (lit b.pt. 62° at 12 mm of mercury). The IR spectrum showed a peak at 1703 cm⁻¹.

### Example 2: Preparation of 1,3-Diiodoacetone

A 250 ml, 3-necked round-bottom flask equipped with stirrer, condenser, and a thermometer was charged with 12.7 g (0.1 mole) of commercially available, practical grade 1,3-dichloroacetone and 100 ml of acetone. 30.0 g (0.2 mole) of sodium iodide were added to the reaction flask at a rate such that the temperature was maintained at between 20 and 30°C. The reaction of sodium iodide with 1,3-dichloroacetone was exothermic. The reaction flask was cooled with ice-water to control the temperature. After the addition of sodium iodide was completed, the contents of the flask were stirred for two hours. The reaction mixture was filtered to collect the sodium chloride formed. The filtrate was evaporated in vacuo on a rotary evaporator. The residue was diluted with 200 ml of methylene chloride and filtered to collect additional salt. The filtrate was then washed with two 100 ml portions of water, dried over anhydrous magnesium sulfate and evaporated in vacuo. A dark brown solid was obtained which was recrystallized from hot ethanol to yield off-white crystals having a melting point of 62-63°C (lit. 62°C). Yield: 46.5 g (75.0%). An infrared spectrum of the solid showed a peak at 1724 cm⁻¹ indicative of the carbonyl group.

### Example 3: Preparation of 1,1-Diiodoacetone

The procedure of Example 2 was followed but 1,1-dichloroacetone was used as the starting material. A dark-brown oil was obtained. The infrared spectrum showed a peak at 1703 cm⁻¹, indicative of the carbonyl group. Yield: 20.9 g (86.8%).

### Example 4: Growth Inhibiting Activity of the Method of the Invention Against Bacteria In Pulp Substrate

The iodoacetones were tested by the pulp-substrate method described in detail in U.S. Patent 2,881,070 at column 5, beginning at line 12 and extending to column 6, line 53. As set forth therein, a percentage kill of 80 percent or higher represents an extremely useful composition, and it does not follow that higher kills are necessarily better or more desirable. The tests utilized Enterobacter aerogenes and Pseudomonas aeruginosa and pulp substrates that had been buffered at pHs of 5.5 and 8.3. The results are set forth in Table 1.

**TABLE 1**

| Percent Kill of Enterobacter aerogenes and Pseudomonas aeruginosa in a Pulp Substrate at pH 5.5 and 8.3 after 18 Hours Contact with Iodoacetones | | | | | |
|---|---|---|---|---|---|
| Test Organism | pH | Conc. ppm | Iodoacetone | 1,3-Diiodo acetone | 1,1-Diiodo acetone |
| Enterobacter aerogenes | 5.0 | 0.1 | 99.7 | 99 | 94 |
| | | 0.3 | 99.5 | 99.9 | 99 |
| | | 0.5 | 100 | 100 | 94 |
| | | 1 | 100 | 100 | 99 |
| | | 2 | 100 | 100 | 99.7 |
| | 8.3 | 0.5 | 57 | 21 | 46 |
| | | 1 | 80 | 16 | 35 |
| | | 2 | 92 | 49 | 35 |
| | | 4 | 99.99 | 93 | 96 |
| | | 8 | 100 | 99.7 | 99 |
| Pseudomonas aeruginosa | 5.0 | 0.1 | 99 | 96 | 78 |
| | | 0.3 | 99.6 | 99.9 | 98 |
| | | 0.5 | 100 | 100 | 98 |
| | | 1 | 99.9 | 99.99 | 99.9 |
| | | 2 | 100 | 99 | 100 |
| | 8.3 | 0.5 | 98 | 19 | 0 |
| | | 1 | 99.99 | 21 | 73 |
| | | 2 | 100 | 74 | 73 |
| | | 4 | 100 | 99.9 | 99.99 |
| | | 8 | 100 | 100 | 100 |

### Example 5: Growth Inhibiting Activity of the Method of the Invention Against Fungus In Pulp Substrate

The growth inhibiting activity of the method of the invention using various iodoacetones on the fungus Aspergillus niger was evaluated. A variation of the pulp substrate method of Example 4 was used.

When fungi are used as test organisms, the pulp-substrate test method is modified to permit the growth of these microorganisms. The pulp substrate comprises an aqueous slurry of spruce groundwood containing 1 percent by weight (dry basis) of wood fibers enriched by the addition of 0.26 percent of sodium nitrate and 0.64 percent of maltose (technical grade). Forty gram portions of the enriched groundwood pulp slurry were added to 250 ml Pyrex Erlenmeyer flasks fitted with loose metal caps and then sterilized. Each of the following substances was then added to the flasks in the order listed:
(1) Sterile distilled or sterile demineralized water as required in each individual case was added to bring the total weight of the contents of each flask to 50 grams, after allowing for all subsequent additions specified hereinafter (including inoculation with the aqueous suspension of spores and/or mycelial fragments of the test fungus).
(2) One milliliter of a 2.0 percent by weight sterile solution of rosin size. Rosin size is the pasty sodium soap of rosin containing approximately 20 to 30 percent free rosin and 30 percent water. A suitable rosin size is that known as rosin size 70D made by Hercules Inc., Kalamazoo, Michigan.
(3) A solution of the toxicant or control agent to be evaluated in each test, to give the concentration desired in parts per million by weight.
(4) A sterile solution of buffer salts to adjust the substrate to a pH of 4.5 to 5.0, prepared from 0.2 M solutions of potassium acid phthalate and sodium hydroxide.
(5) Inoculum consisting of 1 milliliter of an aqueous suspension of spores and/or mycelial fragments of the test organism. Aspergillus niger is the test fungus which was used for these tests.

The buffer mixtures were prepared according to the procedures set forth in U.S. Patent 2,881,070.

After the inoculant suspensions of the test fungi were added, the flasks were incubated at a temperature of 30±1°C for a period adequate for growth to occur in the controls (portions of pulp substrate which contained no toxicant). The customary periods of observation were after 7 and 14 days. Growth was recorded after each period on the basis of the following key:
4 = excellent
3 = good
2 = poor
1 = very poor, scant, questionable
0 = no growth
The results are summarized in Table 2.

**TABLE 2**

| Inhibition of Aspergillus niger by Various Iodoacetones | | | | |
|---|---|---|---|---|
| Test Organism | Conc. ppm | Iodoacetone | 1,3-Diiodo acetone | 1,1-Diiodo acetone |
| Aspergillus niger | 0.5 | 4 | 4 | 4 |
| | 1 | 0 | 4 | 4 |
| | 3 | 0 | 0 | 0 |
| | 5 | 0 | 0 | 0 |

### Example 6: Growth Inhibiting Activity of the Method of the Invention Against Algae

The growth inhibiting activity of the method of the invention against the two algae Chlorella pyrenoidosa and Phormidium inundatum was evaluated in Difco Algae Broth the content of which was as follows:

| Compound | Grams per liter |
|---|---|
| Sodium nitrate | 1.000 |
| Ammonium chloride | 0.050 |
| Calcium chloride | 0.058 |
| Magnesium sulfate | 0.513 |
| Dipotassium phosphate | 0.250 |
| Ferric chloride | 0.003 |

Forty-gram portions of the algae medium were added to 250 ml Pyrex Erlenmeyer flasks fitted with loose metal caps and then sterilized. Each of the following substances was then added to the flasks in the order listed:
1. Sterile algae medium as required to bring the total weight of the contents of each flask to 50 grams, after allowing for all subsequent additions specified hereinafter.
2. Solution of toxicant or control agent to be evaluated in each test, to give the concentration desired in parts per million by weight.
3. Chlorella pyrenoidosa and Phormidium inundatum in amounts sufficient to give excellent growth in the controls after 14 days. This was achieved by adding 1 milliliter of a 14 day old culture having luxuriant growth. The Chlorella pyrenoidosa culture was obtained from American Type Culture Collection No. 7516; Phormidium inundatum, Wisconsin No. 1093, was obtained from the University of Washington.
After the inoculum of the test algae was added, the flasks were incubated at a temperature of 28°±2°C under fluorescent illumination of 250 foot-candle intensity (8 hours light, 16 hours darkness) for a period adequate for growth in the controls (those portions of medium which contained no toxicant). Observations of growth were made at 7-day intervals on the basis of the following key:
4 = excellent
3 = good
2 = poor
1 = very poor, scant, questionable
0 = no growth
The results are summarized in Table 3.

**TABLE 3**

| Inhibition of Chlorella pyrenoidosa and Phormidium inundatum | | | | |
|---|---|---|---|---|
| Test Organism | Conc. ppm | Iodoacetone | 1,3-Diiodo acetone | 1,1-Diiodo acetone |
| Chlorella pyrenoidosa | 0.1 | 4 | 4 | 4 |
| | 0.5 | 3 | 4 | 4 |
| | 1 | 1 | 3 | 4 |
| | 2 | 0 | 0 | 4 |
| | 5 | 0 | 0 | 0 |
| | 10 | 0 | 0 | 0 |
| | 25 | 0 | 0 | 0 |
| Phormidium inundatum | 0.1 | 4 | 4 | 4 |
| | 0.5 | 0 | 3 | 4 |
| | 1 | 0 | 0 | 0 |
| | 2 | 0 | 0 | 0 |
| | 5 | 0 | 0 | 0 |
| | 10 | 0 | 0 | 0 |
| | 25 | 0 | 0 | 0 |

Other embodiments of the invention will be apparent to those skilled in the art from consideration of the specification and practice of the invention disclosed herein. It is intended that the specification and examples be considered exemplary only, with the true scope and spirit of the invention being indicated by the following claims.

## Claims

1. A method for inhibiting the growth of microorganisms other than thermophilic bacteria in an aqueous liquid which comprises the step of adding to said aqueous liquid an iodoacetone compound of the formula: 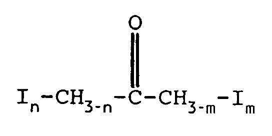 wherein n is 1, 2 or 3 and m is 0, 1, 2 or 3 in an amount of from 0.1 to 500 parts per million parts of aqueous liquid.

2. A method as claimed in claim 1 wherein said microorganism is a bacterium.

3. A method as claimed in claim 2 wherein said bacterium is selected from the group consisting of Enterobacter aerogenes and Pseudomonas aeruginosa.

4. A method as claimed in claim 1 wherein said microorganism is a fungus.

5. A method as claimed in claim 4 wherein said fungus is Aspergillus niger.

6. A method as claimed in claim 1 wherein said microorganism is an alga.

7. A method as claimed in claim 6, wherein said alga is selected from the group consisting of Chlorella pyrenoidosa and Phormidium inundatum.

8. A method as claimed in claim 1 wherein said microorganism is a sulfate-reducing microorganism.

9. A method as claimed in claim 8 wherein said sulfate reducing microorganism is selected from the group consisting of Desulfotomaculum, Desulfovibrio, Desulforistella, Desulfomonas, Desulfobacter and Desulfobulbus.

10. A method as claimed in claim 1 wherein said microorganism is an iron bacterium.

11. A method as claimed in claim 10 wherein said iron bacterium is selected from the group consisting of Sphaerotilus sp., Gallionella sp. and Siderocapsa sp.

12. A method as claimed in claim 1 wherein the microorganisms are those causing slime or biofilm.

13. A method as claimed in claim 12 wherein said aqueous liquid is contained in a swimming pool or in a water cooling device.

14. A method as claimed in claim 1 wherein the amount of said iodoacetone compound is from 0.2 to 250 parts per million parts of aqueous liquid.

15. A method as claimed in any preceding claim wherein said iodoacetone compound is 1,1-diiodoacetone or 1,3-diiodoacetone.

## Patentansprüche

1. Verfahren zum Hemmen des Wachstums von anderen Mikroorganismen als thermophilen Bakterien in einer wässrigen Flüsigkeit, welches den Schritt des Zugebens einer Jodacetonverbindung der Formel: 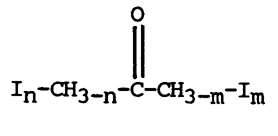 worin n 1, 2 oder 3 ist und m 0, 1, 2 oder 3 ist, zu der wässrigen Flüssigkeit in einer Menge von 0,1 bis 500 Teile pro Million Teile der wässrigen Flüssigkeit umfaßt.

2. Verfahren nach Anspruch 1, worin der Mikroorganismus ein Bakterium ist.

3. Verfahren nach Anspruch 2, worin das Bakterium ausgewählt wird aus der Gruppe bestehend aus Enterobacter aerogenes und Pseudomonas aeruginosa.

4. Verfahren nach Anspruch 1, worin der Mikroorganismus ein Pilz ist.

5. Verfahren nach Anspruch 4, worin der Pilz Aspergillus niger ist.

6. Verfahren nach Anspruch 1, worin der Mikroorganismus eine Alge ist.

7. Verfahren nach Anspruch 6, worin die Alge ausgewählt wird aus der Gruppe bestehend aus Chlorella pyrenoidosa und Phormidium inundatum.

8. Verfahren nach Anspruch 1, worin der Mikroorganismus ein sulfatreduzierender Mikroorganismus ist.

9. Verfahren nach Anspruch 8, worin der sulfatreduzierende Mikroorganismus ausgewählt wird aus der Gruppe bestehend aus Desulfotomaculum, Desulfovibrio, Desulforistella, Desulfomonas, Desulfobacter und Desulfobulbus.

10. Verfahren nach Anspruch 1, worin der Mikroorganismus ein Eisenbakterium ist.

11. Verfahren nach Anspruch 10, worin das Eisenbakterium ausgewählt wird aus der Gruppe bestehend aus Sphaerotilus sp., Gallionella sp. und Siderocapsa sp.

12. Verfahren nach Anspruch 1, worin die Mikroorganismen diejenigen sind, die Schleim oder Biofilm erzeugen.

13. Verfahren nach Anspruch 12, worin die wässrige Flüssigkeit in einem Schwimmbad oder in einer wasserkühlungsvorrichtung enthalten ist.

14. Verfahren nach Anspruch 1, worin die Menge der Jodacetonverbindung von 0,2 bis 250 Teile pro Million Teile der wässrigen Flüssigkeit beträgt.

15. Verfahren nach einem der vorhergehenden Ansprüche, worin die Jodacetonverbindung 1,1-Dijodaceton oder 1,3-Dijodaceton ist.

## Revendications

1. Procédé pour inhiber la croissance de microorganismes autres que des bactéries thermophiles dans un liquide aqueux, caractérisé en ce qu'il comprend l'étape d'addition au liquide aqueux précité d'un composé d'iodoacétone de la formule : 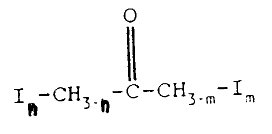 dans laquelle n est égal à 1, 2 ou 3 et m est égal à 0, 1, 2 ou 3, dans la proportion de 0,1 à 500 parties par million de parties du liquide aqueux.

2. Procédé suivant la revendication 1, caractérisé en ce que le microorganisme est une bactérie.

3. Procédé suivant la revendication 2, caractérisé en ce que l'on choisit la bactérie dans le groupe formé par Enterobacter aerogenes et Pseudomonas aeruginosa.

4. Procédé suivant la revendication 1, caractérisé en ce que le microorganisme est un champignon.

5. Procédé suivant la revendication 4, caractérisé en ce que le champignon précité est Aspergillus niger.

6. Procédé suivant la revendication 1, caractérisé en ce que le microorganisme est une algue.

7. Procédé suivant la revendication 6, caractérisé en ce que l'on choisit cette algue dans le groupe formé par Chlorella pyrenoidosa et Phormidium inundatum.

8. Procédé suivant la revendication 1, caractérisé en ce que le microorganisme précité est un microorganisme réducteur de sulfate.

9. Procédé suivant la revendication 8, caractérisé en ce que l'on choisit le microorganisme réducteur de sulfate précité dans le groupe formé par Desulfotomaculum, Desulfovibrio, Desulforistella, Desulfomonas, Desulfobacter et Desulfobulbus.

10. Procédé suivant la revendication 1, caractérisé en ce que le microorganisme précité est une sidérobactérie.

11. Procédé suivant la revendication 10, caractérisé en ce que l'on choisit la sidérobactérie dans le groupe formé par Sphaerotilus sp., Gallionella sp. et Siderocapsa sp.

12. Procédé suivant la revendication 1, caractérisé en ce les microorganismes sont ceux qui engendrent une boue, un voile ou un biofilm.

13. Procédé suivant la revendication 12, caractérisé en ce que le liquide aqueux précité est celui d'un bassin de natation ou d'un dispositif de refroidissement à l'eau.

14. Procédé suivant la revendication 1, caractérisé en ce que la proportion du composé d'iodoacétone précité varie de 0,2 à 250 parties par million de parties du liquide aqueux.

15. Procédé suivant l'une quelconque des revendications précédentes, caractérisé en ce que le composé d'iodoacétone précité est la 1,1-diiodoacétone ou la 1,3-diiodoacétone.
